# FASCICULE DE BREVET EUROPEEN

(11) **EP 3 208 645 B1**
(45) Date de publication et mention de la délivrance du brevet: **30.01.2019**
(21) Numéro de dépôt: 17155295.3
(22) Date de dépôt: 08.02.2017
(51) Int. Cl.: G02B 13/00, F21V 5/00, G02B 3/00

(54) **SYSTÈME DE LENTILLES DE PROJECTION D'AU MOINS UNE SOURCE LUMINEUSE**
SYSTEM VON PROJEKTIONSLINSEN MIT MINDESTENS EINER LICHTQUELLE
SYSTEM OF LENSES FOR PROJECTING AT LEAST ONE LIGHT SOURCE

(30) Priorité: 16.02.2016 FR 1651225
(43) Date de publication de la demande: 23.08.2017
(73) Titulaire: Valeo Vision, 93012 Bobigny Cedex (FR)
(72) Inventeur: COURCIER, Marine, 75011 PARIS (FR); LE CORRE, Jérôme, 75014 PARIS (FR)

(56) Documents cités:
- US-A1- 2012 121 244
- US-A1- 2014 293 588
- US-B1- 6 249 375

## Description

La présente invention se rapporte à un système de lentilles de projection d'au moins une source lumineuse, tel qu'un laser scan ou une diode électroluminescente dite LED, dite immergée dans une première lentille dite primaire. L'invention trouvera de nombreuses applications dans le domaine de l'éclairage et plus particulièrement dans le domaine des systèmes d'éclairage et/ou de signalisation pour véhicule automobile.

Le document US 2014/0293588 divulgue un système de lentilles de projection selon l'art antérieur.

Dans le domaine de l'éclairage, et notamment dans le domaine de l'automobile, différents types d'ampoules ont été utilisés comme source lumineuse mais, récemment, les diodes électroluminescente (LED) sont de plus en plus largement utilisées. En effet, les diodes électroluminescentes (LED) ont une excellente efficacité de conversion de l'électricité en lumière, émettent une faible quantité de chaleur, présentent une taille et un poids réduits et ont une longue durée de vie.

Compte-tenu de ces avantages, de nombreux systèmes d'éclairage ont été conçus en utilisant des réseaux de LEDs positionnés au droit d'une lentille, généralement une lentille asphérique qui permet de corriger des aberrations. Par ailleurs, il est usuel de calculer la forme des surfaces des dioptres des systèmes d'éclairage afin, d'une part, de limiter les aberrations induites par lesdits dioptres que la lumière traverse et, d'autre part, d'obtenir le faisceau de lumière souhaité en sortie. Bien qu'il soit possible d'obtenir une bonne imagerie pour une LED située sur l'axe optique du système d'éclairage, les systèmes d'éclairage comprennent un grand nombre de LEDs, et par conséquent des LEDs éloignées de l'axe optique, qui sont à l'origine d'aberrations de champ gênantes.

L'invention se propose d'améliorer la situation et concerne à cet effet un système de lentilles de projection d'au moins une source lumineuse comprenant, depuis ladite source et dans la direction de propagation de la lumière, au moins un premier groupe d'éléments optiques constitué d'au moins une première lentille convergente dite primaire de forme hémisphérique, en contact avec ladite source lumineuse, obtenue dans un matériau présentant une constringence forte et présentant un ratio entre son épaisseur suivant l'axe optique et sa largeur supérieur à 0,5, un second groupe d'éléments optiques constitué d'au moins une lentille divergente obtenue dans un matériau présentant une constringence faible, une pupille et un troisième groupe d'éléments optiques constitué d'au moins un réflecteur convergent ou d'au moins une lentille convergente obtenue dans un matériau présentant une constringence forte.

L'optique primaire de forme hémisphérique permet de capter un maximum de lumière issue de la source lumineuse et les lentilles des trois systèmes optiques, successivement convergente, divergente et convergente, permettent de corriger les aberrations et de mettre en forme le faisceau lumineux.

Afin que la lumière captée par l'optique primaire soit la plus importante possible, la première lentille convergente primaire hémisphérique présente un écart à une sphère inférieur à 10% de l'épaisseur et, de préférence, un écart à une sphère inférieur à 3% de l'épaisseur.

De préférence, le premier groupe d'éléments optiques comporte une seconde lentille comprenant au moins une face asphérique, la face asphérique de la seconde lentille du premier groupe d'éléments optiques s'étendant du côté opposé à la lentille primaire.

Par ailleurs, la lentille divergente du second groupe d'éléments optiques consiste, de préférence, en une lentille biconcave.

Alternativement, la lentille divergente du second groupe d'éléments optiques consiste en une lentille plan-concave.

De préférence, la lentille convergente du troisième groupe d'éléments optiques comporte au moins une face asphérique, la face asphérique de la lentille convergente du troisième groupe d'éléments optiques s'étendant du côté opposé à la pupille positionnée entre le second groupe d'éléments optiques et le troisième groupe d'éléments optiques.

De préférence, la source lumineuse consiste dans au moins une source LED ou un laser.

Selon un aspect de l'invention, la source lumineuse consiste dans un dispositif de conversion de longueur d'onde en contact avec la lentille convergente primaire et recevant le rayonnement d'une source primaire constituée d'une pluralité de sources LED.

De préférence, le dispositif de conversion de longueur d'onde est constitué d'un substrat comportant au moins deux matériaux formant respectivement un filtre interférentiel et répartis en au moins deux zones différentes.

L'invention sera mieux comprise à la lumière de la description suivante qui n'est donnée qu'à titre indicatif et qui n'a pas pour but de la limiter, accompagnée des dessins joints parmi lesquels :
- La figure 1 est une représentation schématique du système de lentilles de projection d'au moins une source lumineuse conforme à l'invention ;
- La figure 2 est une représentation d'une variante d'exécution du système de lentilles de projection conforme à l'invention, ladite variante d'exécution comportant un dispositif de conversion de longueur d'onde.

Sur les figures, les éléments identiques ou analogues portent les mêmes références.

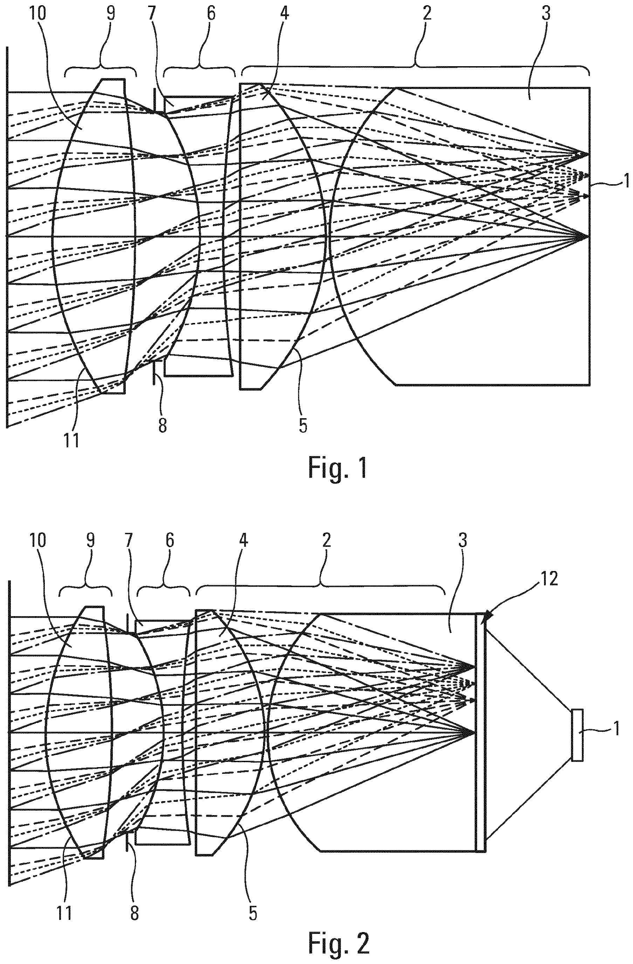

Comme illustré sur la figure 1, l'invention concerne un système de lentilles de projection d'au moins une source lumineuse 1. Ledit système de lentilles comprend, depuis ladite source lumineuse 1 et dans la direction de propagation de la lumière, un premier groupe d'éléments optiques 2 constitué d'une première lentille convergente 3 dite primaire de forme hémisphérique, en contact avec ladite source lumineuse 1, obtenue dans un matériau présentant une constringence forte et présentant un ratio entre son épaisseur suivant l'axe optique et sa hauteur supérieur à 0,5, et d'une seconde lentille 4 comprenant une face asphérique 5, le dioptre asphérique 5 de la seconde lentille 4 du premier groupe d'éléments optiques 2 correspondant au dioptre d'entrée de la lentille, i.e. s'étendant du côté de la lentille primaire 4, un second groupe d'éléments optiques 6 constitué d'une lentille divergente 7 obtenue dans un matériau présentant une constringence faible, une pupille 8 et un troisième groupe d'éléments optiques 9 constitué d'une lentille convergente 10 obtenue dans un matériau présentant une constringence forte. Dans la suite de la description, on entend par « constringence forte » une constringence supérieure à 40 et une « constringence faible » une constringence inférieure à 40.

On observera que la source lumineuse 1 pourra consister dans toute source lumineuse primaire ou dans toute source lumineuse secondaire telle qu'une zone de sortie, ou de découplage, de guides de lumière, une zone de sortie, ou de découplage, d'une matrice de dioptres convergents, ou une image virtuelle (dans la matière) générée par une matrice de dioptres convergents sans pour autant sortir du cadre de l'invention.

Par exemple, la lentille primaire 3 du premier groupe d'éléments optiques 2 et la lentille convergente 10 du troisième groupe d'éléments optiques 9 pourront être obtenues dans du verre optique commercialisé sous la référence N-LAK33A par la société SCHOTT et dont la constringence est égale à 52, dans du polyméthacrylate de méthyle communément désigné par PMMA selon l'acronyme anglo-saxon « PolyMethyl MethAcrylate » et dont la constringence est égale à 58 ou dans tout autre polymère thermoplastique transparent ayant la même constringence. La lentille divergente 6 du second groupe d'éléments optiques 6 pourra être obtenue dans tout matériau présentant une constringence inférieure à 40 tel que du polycarbonate (PC) dont la constringence est de 30 ou du verre N-SF2 dont la constringence est de 339 par exemple.

La lentille primaire 3 de forme hémisphérique permet d'extraire un maximum de lumière issue de la source lumineuse 1 et les lentilles 3, 4, 7 et 10 des trois systèmes optiques 2, 6 et 9, successivement convergente, divergente et convergente, permettent de corriger les aberrations et de mettre en forme le faisceau lumineux. On notera que l'on entend par constringence l'indice représentatif de la dispersion chromatique des lentilles. Ainsi, la constringence est équivalente au nombre d'Abbe et au coefficient de dispersion et correspond à la variation d'indice de réfraction de la matière en fonction de la longueur d'onde de la lumière. Plus la constringence est élevée moins la lentille présente de dispersion chromatique.

Afin d'obtenir conjointement la meilleure extraction de la lumière et la meilleure correction des aberrations optiques, la première lentille convergente primaire 3 hémisphérique présente un écart à une sphère inférieur à 10% de l'épaisseur de la lentille et, de préférence, un écart à une sphère inférieur à 3% de l'épaisseur.

Par ailleurs, la lentille divergente 6 du second groupe d'éléments optiques consiste en une lentille biconcave dans laquelle le dioptre d'entrée de la lentille présente un rayon de courbure supérieur au rayon de courbure du dioptre de sortie. De plus, la lentille convergente 10 du troisième groupe d'éléments optiques comporte un dioptre asphérique 11, ledit dioptre asphérique 11 de la lentille convergente 10 du troisième groupe d'éléments optiques 9 s'étendant du côté opposé à la pupille 8 positionnée entre le second groupe d'éléments optiques 6 et le troisième groupe d'éléments optiques 9, i.e. correspondant au dioptre de sortie de ladite lentille convergente 10. On notera également que les axes optiques des lentilles 3, 4, 6 et 10 sont coaxiaux.

Dans cet exemple de réalisation, la source lumineuse 1 consiste en des diodes électroluminescentes, dites LEDs, dont le phosphore est dit immergé dans la lentille primaire 3. On entend par « immergé » le fait que le phosphore des LEDs est au contact de la lentille primaire 3. De cette manière, la lumière émise par le phosphore sort directement « immergée dans l'optique primaire. Toutefois, il est bien évident que la source lumineuse pourra consister dans toute source lumineuse bien connue de l'homme du métier sans pour autant sortir du cadre de l'invention.

Selon une première variante d'exécution, non représentée sur les figures, le premier groupe d'éléments optiques 2 pourra ne comporter qu'une seule lentille convergente primaire 3 hémisphérique.

Selon une autre variante d'exécution, non représentée sur les figures, la lentille convergente 10 du troisième groupe d'éléments optiques 9 pourra être substituée par un ou plusieurs réflecteurs convergent(s).

Par ailleurs, il va de soi que chacune des lentilles 3, 5, 7 et 10 pourront être substituées par au moins deux lentilles sans pour autant sortir du cadre de l'invention.

Selon une autre variante d'exécution en référence à la figure 2, ledit système de lentilles comprend de la même manière que précédemment, depuis ladite source lumineuse 1 et dans la direction de propagation de la lumière, un premier groupe d'éléments optiques 2 constitué d'une première lentille convergente 3 dite primaire de forme hémisphérique, en contact avec ladite source lumineuse 1, obtenue dans un matériau présentant une constringence forte et présentant un ratio entre son épaisseur suivant l'axe optique et sa largeur supérieur à 0,5, et d'une seconde lentille 4 comprenant une face asphérique 5, le dioptre asphérique 5 de la seconde lentille 4 du premier groupe d'éléments optiques 2 correspondant au dioptre d'entrée de la lentille, i.e. s'étendant du côté de la lentille primaire 4, un second groupe d'éléments optiques 6 constitué d'une lentille divergente 7 obtenue dans un matériau présentant une constringence faible, une pupille 8 et un troisième groupe d'éléments optiques 9 constitué d'une lentille convergente 10 obtenue dans un matériau présentant une constringence forte.

Ledit système de lentilles diffère de celui précédemment décrit par le fait qu'il comporte un dispositif de conversion de longueur d'onde 12 en contact avec la lentille convergente primaire 3 et recevant le rayonnement d'une source lumineuse primaire 1 constituée d'une pluralité de diodes électroluminescentes dites LED. Ainsi, le dispositif de conversion de longueur se comporte comme une source lumineuse secondaire immergée, i.e. en contact avec la lentille convergente primaire 3.

On observera que la pluralité de diodes électroluminescentes pourra être substituée par une unique LED constituée de zones adressables individuellement ou par une zone de formation d'une image par balayage d'un faisceau laser, ladite zone comportant une surface diffusante et/ou réfléchissante, sans pour autant sortir du cadre de l'invention.

Ainsi, le système d'éclairage suivant l'invention est apte à projeter sous forme de faisceau lumineux une image de la source lumineuse placée au foyer du système optique, c'est-à-dire au contact de la lentille primaire 3 hémisphérique. Plus particulièrement, ladite source lumineuse 1 peut être une matrice de LEDs, c'est-à-dire une surface lumineuse découpée en zones, telles que des carrés communément appelés « pixels » par exemple, qui peuvent être allumées ou éteintes indépendamment les unes des autres afin de réaliser un système d'éclairage dit adaptatif. Un tel système d'éclairage adaptatif d'un véhicule permet d'adapter la répartition de la lumière du faisceau aux conditions de circulation. Par exemple, lorsque tous les pixels sont allumés, le système projette sur la route un faisceau lumineux puissant, communément appelé faisceau de route qui est éblouissant pour les autres conducteurs, et, lorsqu'un véhicule est détecté devant le système d'éclairage, le ou les pixels dont la lumière éblouit l'autre conducteur sont éteints dans le faisceau pour former un faisceau moins puissant communément appelé faisceau de croisement.

Il est bien entendu que la présente invention n'est en aucune façon limitée aux formes de réalisations décrites ci-dessus et que bien des modifications peuvent y être apportées sans sortir du cadre des revendications annexées.

## Revendications

1. Système de lentilles de projection d'au moins une source lumineuse (1) comprenant, depuis ladite source (1) et dans la direction de propagation de la lumière, au moins un premier groupe d'éléments optiques (2) constitué d'au moins une première lentille convergente dite primaire (3), en contact avec ladite source lumineuse (1), obtenue dans un matériau présentant une constringence forte, supérieure à 40, et présentant un ratio entre son épaisseur suivant l'axe optique et sa largeur supérieur à 0,5, un second groupe d'éléments optiques (6) constitué d'au moins une lentille divergente (7) obtenue dans un matériau présentant une constringence faible, inférieure à 40, une pupille (8) et un troisième groupe d'éléments optiques (9) constitué d'au moins un réflecteur convergent ou d'au moins une lentille convergente (10) obtenue dans un matériau présentant une constringence forte, supérieure à 40.

2. Système de lentilles selon la revendication 1 dans lequel la première lentille convergente primaire est de forme hémisphérique (3) et présente un écart à une sphère inférieur à 10% de l'épaisseur et, de préférence, un écart à une sphère inférieur à 3% de l'épaisseur.

3. Système de lentilles selon l'une quelconque des revendications 1 ou 2 dans lequel le premier groupe d'éléments optiques (2) comporte une seconde lentille (4) comprenant au moins un dioptre asphérique (5).

4. Système de lentilles selon la revendication 3 dans lequel le dioptre asphérique (5) de la seconde lentille (4) du premier groupe d'éléments optiques (2) s'étend du côté de la lentille primaire (3).

5. Système de lentilles selon l'une quelconque des revendications 1 à 4 dans lequel la lentille divergente (7) du second groupe d'éléments optiques (6) consiste en une lentille biconcave.

6. Système de lentilles selon l'une quelconque des revendications 1 à 4 dans lequel la lentille divergente du second groupe d'éléments optiques consiste en une lentille plan-concave.

7. Système de lentilles selon l'une quelconque des revendications 1 à 6 dans lequel la lentille convergente (10) du groupe d'éléments optiques (9) comporte au moins un dioptre asphérique (11).

8. Système de lentilles selon la revendication 7 dans lequel le dioptre asphérique (11) de la lentille convergente (10) du troisième groupe d'éléments optiques (9) s'étend du côté opposé à la pupille (8) positionnée entre le second groupe d'éléments optiques (6) et le troisième groupe d'éléments optiques (9).

9. Système de lentilles selon l'une quelconque des revendications 1 à 8 dans lequel la source lumineuse (1) consiste en au moins une source LED ou un laser.

10. Système de lentilles selon l'une quelconque des revendications 1 à 8 dans lequel la source lumineuse consiste en un dispositif de conversion de longueur d'onde (12) en contact avec la lentille convergente primaire (3) et recevant le rayonnement d'une source primaire (1) constituée d'une pluralité de sources LED.

## Patentansprüche

1. System von Projektionslinsen mindestens einer Lichtquelle (1), das ausgehend von der Quelle (1) und in der Ausbreitungsrichtung des Lichts mindestens eine erste Gruppe von optischen Elementen (2), die aus mindestens einer ersten konvergierenden so genannten Primärlinse (3) besteht, in Kontakt mit der Lichtquelle (1), die aus einem Material erhalten wird, das eine große Abbesche Zahl größer als 40 aufweist, und ein Verhältnis zwischen ihrer Dicke gemäß der optischen Achse und ihrer Breite größer als 0,5 aufweist, eine zweite Gruppe von optischen Elementen (6), die aus mindestens einer divergierenden Linse (7) besteht, die aus einem Material mit einer niedrigen Abbeschen Zahl kleiner als 40 besteht, eine Pupille (8) und eine dritte Gruppe von optischen Elementen (9) enthält, die aus mindestens einem konvergierenden Reflektor oder mindestens einer konvergierenden Linse (10) besteht, die aus einem Material erhalten wird, das eine hohe Abbesche Zahl höher als 40 aufweist.

2. Linsensystem nach Anspruch 1, wobei die erste konvergierende Primärlinse (3) halbkugelförmig ist und eine sphärische Abweichung geringer als 10% der Dicke und vorzugsweise eine sphärische Abweichung geringer als 3% der Dicke aufweist.

3. Linsensystem nach einem der Ansprüche 1 oder 2, wobei die erste Gruppe von optischen Elementen (2) eine zweite Linse (4) aufweist, die mindestens einen asphärischen Diopter (5) enthält.

4. Linsensystem nach Anspruch 3, wobei der asphärische Diopter (5) der zweiten Linse (4) der ersten Gruppe von optischen Elementen (2) sich auf der Seite der Primärlinse (3) erstreckt.

5. Linsensystem nach einem der Ansprüche 1 bis 4, wobei die divergierende Linse (7) der zweiten Gruppe von optischen Elementen (6) aus einer bikonkaven Linse besteht.

6. Linsensystem nach einem der Ansprüche 1 bis 4, wobei die divergierende Linse der zweiten Gruppe von optischen Elementen aus einer plankonkaven Linse besteht.

7. Linsensystem nach einem der Ansprüche 1 bis 6, wobei die konvergierende Linse (10) der Gruppe von optischen Elementen (9) mindestens einen asphärischen Diopter (11) aufweist.

8. Linsensystem nach Anspruch 7, wobei der asphärische Diopter (11) der konvergierende Linse (10) der dritten Gruppe von optischen Elementen (9) sich auf der Seite erstreckt, die der Pupille (8) entgegengesetzt ist, die zwischen der zweiten Gruppe von optischen Elementen (6) und der dritten Gruppe von optischen Elementen (9) positioniert ist.

9. Linsensystem nach einem der Ansprüche 1 bis 8, wobei die Lichtquelle (1) aus einer LED-Quelle oder einem Laser besteht.

10. Linsensystem nach einem der Ansprüche 1 bis 8, wobei die Lichtquelle aus einer Wellenlängenumwandlungsvorrichtung (12) in Kontakt mit der konvergierende Primärlinse (3) besteht und die Strahlung einer Primärquelle (1) empfängt, die aus einer Vielzahl von LED-Quellen besteht.

## Claims

1. System of lenses for projecting at least one light source (1) comprising, from said source (1) and in the direction of propagation of the light, at least one first group of optical elements (2) made up of at least one first convergent lens, called primary lens (3), in contact with said light source (1), obtained from a material exhibiting a high constringence, greater than 40, and exhibiting a ratio between its thickness along the optical axis and its width greater than 0.5, a second group of optical elements (6) made up of at least one divergent lens (7) obtained from a material exhibiting a low constringence, less than 40, a pupil (8) and a third group of optical elements (9) made up of at least one convergent reflector or of at least one convergent lens (10) obtained from a material exhibiting a high constringence, greater than 40.

2. System of lenses according to Claim 1, in which the first, primary convergent lens is of hemispherical form (3) and exhibits a discrepancy to a sphere less than 10% of the thickness and, preferably, a discrepancy to a sphere less than 3% of the thickness.

3. System of lenses according to either one of Claims 1 or 2, in which the first group of optical elements (2) comprises a second lens (4) comprising at least one aspherical diopter (5).

4. System of lenses according to Claim 3, in which the aspherical diopter (5) of the second lens (4) of the first group of optical elements (2) extends on the side of the primary lens (3).

5. System of lenses according to any one of Claims 1 to 4, in which the divergent lens (7) of the second group of optical elements (6) consists of a biconcave lens.

6. System of lenses according to any one of Claims 1 to 4, in which the divergent lens of the second group of optical elements consists of a plano-concave lens.

7. System of lenses according to any one of Claims 1 to 6, in which the convergent lens (10) of the group of optical elements (9) comprises at least one aspherical diopter (11).

8. System of lenses according to Claim 7, in which the aspherical diopter (11) of the convergent lens (10) of the third group of optical elements (9) extends on the side opposite the pupil (8) positioned between the second group of optical elements (6) and the third group of optical elements (9).

9. System of lenses according to any one of Claims 1 to 8, in which the light source (1) consists of at least one LED source or a laser.

10. System of lenses according to any one of Claims 1 to 8, in which the light source consists of a wavelength conversion device (12) in contact with the primary convergent lens (3) and receiving the radiation from a primary source (1) made up of a plurality of LED sources.
